# EUROPÄISCHE PATENTSCHRIFT

(11) **EP 0 522 199 B1**
(45) Veröffentlichungstag und Bekanntmachung des Hinweises auf die Patenterteilung: **19.03.1997**
(21) Anmeldenummer: 91117762.4
(22) Anmeldetag: 17.10.1991
(51) Int. Cl.: F16K 31/122, G05D 16/18

(54) **Regelventil**
Control valve
Soupape de régulation

(30) Priorität: 12.07.1991 DE 9108617 U
(43) Veröffentlichungstag der Anmeldung: 13.01.1993
(73) Patentinhaber: MMM MÜNCHENER MEDIZIN MECHANIK GMBH, D-81369 München (DE)
(72) Erfinder: Hofmann, Ludwig, Dipl.-Ing., W-8000 München 70 (DE)
(74) Vertreter: Grünecker, Kinkeldey, Stockmair & Schwanhäusser Anwaltssozietät

(56) Entgegenhaltungen:
- EP-A- 0 287 299
- DE-A- 2 358 969
- FR-A- 562 326
- GB-A- 847 608
- GB-A- 1 274 883
- US-A- 3 328 305
- US-A- 3 757 640
- US-A- 4 875 502

## Beschreibung

Die vorliegende Erfindung bezieht sich auf ein Regelventil gemäß dem Oberbegriff vom Patentanspruch 1.

Ein derartiges Regelventil ist aus der US-PS 3 228 305 bekannt. Bei diesem Regelventil findet ein Stellungsgeber Anwendung, der durch eine erste Druckkammer in Öffnungsrichtung gedrängt werden kann, und durch eine zweite Druckkammer, welche im Inneren eines Kolbens ausgebildet ist, in Schließrichtung gedrängt werden kann. Ob der Stellungsgeber in Öffnungsrichtung oder in Schließrichtung bewegt wird, hängt davon ab, ob die erste Druckkammer druckbeaufschlagt wird, und ob ein Spindelmechanismus eine Verschiebung des Stellungsgebers zuläßt. Bei diesem herkömmlichen Regelventil wird dann über einen elektromechanisch betätigten Klinkenmechanismus gesteuert, ob eine Drehbewegung eines Spindel- bzw. eine Verschiebebewegung des mit einem Arbeitskolben über eine Druckkammer gekoppelten Stellungsgebers erfolgen soll oder nicht. Bei dieser herkömmlichen Konstruktion strömt bei Erreichen einer Sollstellung permanent Fluid über einen Ausgangskanal an die Umgebung ab. Die Ansprechgeschwindigkeit dieses Regelventiles ist relativ gering.

Aus FR-A-562 326 ist eine Antriebsvorrichtung bekannt, bei welcher in Abhängigkeit von der Relativposition eines Ventilschiebers gegenüber einem Stellkolben entweder eine obere oder eine untere Wirkkammer mit einer Druckleitung in Fluidverbindung steht. Sobald eine der beiden Wirkkammern mit der Druckleitung in Fluidverbindung steht, steht die verbleibende Druckkammer mit einer Ablaßleitung in Fluidverbindung. Die einzelnen Wirkkammern sind nicht miteinander verbindbar.

Aus US-A-3 757 640 ist eine Antriebsvorrichtung mit einem beidseitig druckbeaufschlagten Kolbenelement bekannt, wobei die durch dieses Kolbenelement gebildeten Wirkkammern permanent über einen Drosselkanal miteinander in Fluidverbindung stehen. Bei dieser herkömmlichen Vorrichtung strömt bei Erreichen einer Vorgabeposition permanent Fluid durch beide Wirkkammern und durch eine Ausgangsbohrung hindurch an die Umgebung ab. Aus DE-A-23 58 969 ist ein Ventil bekannt, welches ein über eine Kolbeneinrichtung bewegbares und mittels einer Feder in Öffnungsrichtung vorbelastetes Schließelement aufweist. Die Kolbeneinrichtung weist einen ersten Kolben auf und definiert eine erste Wirkkammer, welche zur Bewegung des Schließelementes in Schließrichtung entgegen der durch die Feder erzeugten Rückstellkraft druckbeaufschlagt wird. Zur Bewegung des Schließelementes in eine einstellbar festlegbare Zwischenstellung ist eine zweite Kolbeneinrichtung vorgesehen, welche eine zweite Wirkkammer und einen darin bewegbaren zweiten Kolben aufweist. Der zweite Kolben ist gleichachsig zur ersten Kolbeneinrichtung angeordnet und mit einer in dessen Axialrichtung verlaufenden Innengewindebohrung versehen, in welche eine Anschlagschraube eingeschraubt ist. Durch diese Anschlagschraube ist der maximale Verstellweg, über welchen das Schließelement durch die zweite Kolbeneinrichtung bewegbar ist, einstellbar. Die erste Kolbeneinrichtung dient demnach dem vollständigen Schließen oder Öffnen des Ventils, und die zweite Kolbeneinrichtung dient der Bewegung des Schließelementes in eine einstellbar vorbestimmte Zwischenstellung.

Aus GB-A-1 274 883 ist ein Hochdruckabsperrventil mit einem Ventilgehäuse und einem im Inneren einer in dem Ventilgehäuse definierten Druckkammer bewegbaren Schließelement bekannt. Die Druckkammer steht über einen Drosselkanal mit einer Einlaßseite des Absperrventiles und über einen Auslaßkanal mit einer Auslaßseite des Absperrventiles in Verbindung. Eine von dem Schließelement in der Druckkammer definierte Kolbenfläche weist einen Querschnit auf, welcher größer ist als eine zum Absperren eines Durchgangsquerschnittes vorgesehene Stirnfläche des Schließelementes, so daß bei Druckgleichheit zwischen Druckkammer und Einlaßseite eine das Schließelement in Schließstellung drängende Kraft überwiegt. Zum Öffnen des Absperrventiles wird eine über eine Hochdruckdichtung in die Druckkammer führende und mit dem Schließelement gekoppelte Spindel in Öffnungsrichtung bewegt und ermöglicht dabei ein Abströmen des, über den Drosselkanal der Druckkammer zugeführten Fluides zu der Auslaßseite des Ventiles hin. Sobald dabei über den Auslaßkanal eine größere Fluidmenge abströmen kann, als die Druckkammer über den Drosselkanal nachgeführt wird, fällt der Druck im Inneren der Druckkammer ab. Wenn der Druck im Inneren der Druckkammer derart abgesenkt ist, daß die resultierende, auf das Schließelement wirkende Schließkraft geringer ist als jene, in dem zunächst noch verschlossenen Durchgangsquerschnitt wirkende Druckkraft, bewegt sich das Schließelement in eine Offenstellung, und das unter hohem Druck stehende Fluid kann über den Durchgangsquerschnitt zur Auslaßseite des Ventils hin abströmen. Zum Schließen des Ventiles wird die Spindel in Schließrichtung bewegt und verschließt dabei den in dem Schließelement gebildeten und mit der Auslaßseite des Absperrventiles in Verbindung stehenden Auslaßkanal. Vermittels des über den Drosselkanal in die Druckkammer ständig nachströmenden Fluides steigt der Druck im Inneren der Druckkammer erneut an und drängt das Schließelement gegen den Durchgangsquerschnitt. Zur Gewährleistung der Funktion dieses Absperrventiles ist es erforderlich, neben dem Schließelement auch die Spindel gegenüber der Auslaßseite des Absperrventiles bzw. der Umgebung des Absperrventiles durch hochdruckfeste Packungen abzudichten. Bei diesem herkömmlichen Absperrventil muß, falls nur ein geringer Fluiddruck an der Einlaßseite anliegt, die gesamte, zur Bewegung des Schließelementes erforderliche Schließkraft über die Spindel auf das Schließelement über einen Kegelventilsitz aufgebracht werden. Dieses herkömmliche Absperrventil ist auch auf eine Durchströmung von der Einlaßseite zu der Auslaßseite hin beschränkt. Bei einer Umkehrung der Durchströmungsrichtung des Absperrventiles versagt dieser Mechanismus.

Aus EP-A-0 287 299 ist ein Steuersystem für ein Ventil mit einem durch einen Elektromotor verfahrbaren Schließelement bekannt, wobei diese Druckschrift eine Anordnung offenbart, in welcher ein Motor über ein Untersetzungsgetriebe starr mit einem Stellglied zur Bewegung des Schließelementes gekoppelt ist. Bei dieser herkömmlichen Konstruktion wird über ein Potentiometer, das mittels eines Getriebes mit dem Schließelement gekoppelt ist, der Öffnungsgrad des Ventiles erfaßt und einer Steuereinheit zugeführt. Obgleich durch ein derartiges System eine äußerst exakte Positionierung des Schließelementes möglich wird, erweist sich dieses im Hinblick auf den hohen Schaltungsaufwand und die erforderliche Öffnungsgraderfassung sowie hinsichtlich eines zusätzlichen Verkabelungsaufwandes als teuer und, unter ungünstigen Rahmenbedingungen, als störanfällig.

Der Erfindung liegt die Aufgabe zugrunde, ein Regelventil der eingangs genannten Art zu schaffen, welches einfach und preiswert herstellbar ist, und welches auf konstruktiv einfache Weise mit geringen Kräften ansteuerbar ist und sich dabei durch eine hohe Ansprechgeschwindigkeit auszeichnet.

Diese Aufgabe wird erfindungsgemäß durch ein Regelventil gemäß Patentanspruch 1 gelöst.

Vorteilhafte Weiterbildungen dieses Regelventiles sind Gegenstand der Unteransprüche.

Besonders einfach wird der Stellungsgeber dadurch ausgebildet, daß er aus einer in Bewegungsrichtung des Ventilschiebers axial bewegbaren Stange ausgebildet ist, so daß zum Verschieben der Stange eine entsprechende Änderung des Ventilweges erzeugt wird. Dabei kann das Bewegungsverhältnis beispielsweise als 1:1 gewählt werden, so daß einem vorgegebenen Weg des Stellungsgebers ein gleicher Weg des Ventilgebers entspricht.

In einer alternativen Ausführungsform kann der Stellungsgeber aus einer drehbar gelagerten Spindel ausgebildet sein, die sich in einem entsprechenden Innengewinde einer Führungshülse eingreift und diese axial bewegt, wobei hierbei eine besonders exakte Einstellmöglichkeit erreicht wird.

Auf einfache Weise kann der Stellungsgeber mittels eines Motors, insbesondere eines Schrittmotors in die jeweils gewünschte Stellung bewegt werden, wobei dieser Schrittmotor entweder eine Linearbewegung oder eine Drehbewegung je nach Ausführungsform des Stellungsgebers ausführt.

Zur einfachen Steuerung des Regelventils weist dieses zwischen Stellungsgeber und Ventilantrieb ein Steuerelement auf, das bei Erreichen der vorgegebenen Position des Ventils den Antrieb beendet. Dadurch wird erreicht, daß die durch den Antrieb erzeugte Kraft entfernt bzw. abgebaut wird, wodurch einerseits erreicht wird, daß das Regelventil nicht unnötigem Verschleiß ausgesetzt wird, und andererseits, da keine einseitig wirkende Kraft herrscht, eine schnelle Positionänderung in beide Richtungen durchgeführt werden kann.

In einer ersten bevorzugten Ausführungsform ist das Steuerelement als Ventil oder Schieber ausgebildet.

Das als Steuerelement ausgebildete Ventil kann auf einfache und sichere Weise aufgebaut sein aus einer Stange mit einem an einem ihrer Enden angeordneten ersten Endflansch, der mit einer Durchgangsöffnung zum Öffnen und Schließen des Ventils zusammenwirkt.

An ihrem dem ersten Endflansch entgegengesetzten Ende weist die Stange einen zweiten Endflansch auf, der in Anlage an einen Stellungsgeber bringbar ist.

Um vorteilhafterweise eine sichere Funktionsweise des Durchlaßventils sicherzustellen, weist dieses eine Feder auf, die den ersten Flansch in Richtung der Schließstellung des Durchlaßventils beaufschlagt. Somit wird sichergestellt, daß bei Anlegen eines Fluiddruckes zum Öffnen des Regelventils eine entsprechend schnelle Öffnung gewährleistet ist, da die Verbindungsleitung zwischen den beiden Kammern geschlossen ist.

Um bei Endstellung des geöffneten Regelventils zu verhindern, daß weiterhin das das Druck erzeugende Medium, das über das Durchlaßventil von der einen in die andere Kammer überleitbar ist, aus der Kammer entweicht, in die das Druckfluid übergeleitet wird, weist der zweite Endflansch an seinem dem Stellungsgeber zugewandten Ende einen Einsatz aus elastischem Material auf. Alternativ kann der Einsatz auch weggelassen werden, wodurch aufgrund des Zusammenwirkens von harten, nicht nachgiebigen Materialien eine genau definierte Anlagestellung erzeugt wird.

Gemäß einer alternativen Ausführungsform des Regelventils weist der Kolben eine an seiner dem Ventilschieber abgewandten Seite, mit ihm verbundene Steuerstange auf, die in einer in dem rohrförmigen Fortsatz der entsprechenden Kammer angeordneten Führungshülse gleitbeweglich gelagert ist.

Zur Verwirklichung eines einfachen Durchflußventils für das Druckmedium erstreckt sich der verschließbare Kanal von der dem Ventilschieber zugeordneten Kolbenseite durch den Kolben und die Steuerstange hindurch und endet am Umfangsrand der Steuerstange und ist damit zur Führungshülse hin offen, wobei sie mit dieser zusammenwirkt. Zur Vermeidung eines komplizierten Aufbaus, insbesondere zur Erzielung einer sicheren Führung der Steuerstange unter gleichzeitiger Gewährleistung einer entsprechenden Ventilfunktion weist die Hülse eine Ausnehmung auf, die sich in Radialrichtung von ihrer Innenwand aus erstreckt, und weist eine sich vom äußeren Umfang der Hülse nach innen in Längsrichtung erstreckende Kerbe auf, die die Ausnehmung mit der zugeordneten Kammer des Gehäuses verbindet.

Andererseits weist zur Entlüftung des oberen Kolbenraumes die Steuerstange unterhalb ihrer Oberseite, die in Anschlag an den Stellungsgeber gelangt, eine Längskerbe an ihrem Umfang auf, die über einen Kanal, ausgebildet in Hülse und Seitenwand des rohrförmigen Fortsatzes, die zugeordnete Kammer im Gehäuse mit der Umgebung in Verbindung setzt bzw. von dieser trennt, je nach Axialstellung der Steuerstange.

Zur Sicherung einer umweltschonenden Betriebsweise des Regelventils wird der Fluiddruck durch Druckluft erzeugt. Diese kann mit konstantem Druck in das Gehäuse eingespeist werden, so daß stets definierte Zustände im Regelventil je nach Lage des Stellungsgebers vorhanden sind.

Anstelle eines Schrittmotors kann der Stellungsgeber auch entsprechend von Hand bewegt werden.

Andere geeignete Antriebe des Stellungsgebers können ebenfalls verwendet werden.

Im bisherigen bevorzugten Ausführungsfalle wird der Ventilantrieb durch Fluiddruck erzeugt. Alternativ hierzu kann in einer weiteren Ausführungsform der Ventilantrieb elektrisch erfolgen, wobei dann das Steuerelement als Schalter ausgebildet sein kann.

Zur Sicherung bei Ausfall der Antriebsenergie ist das erfindungsgemäße Regelventil so ausgebildet, bzw. weist die dem Fachmann geläufigen Elemente auf, mit denen der Ventilschieber bei Ausfall der Antriebsenergie in eine vorbestimmte Stellung fährt.

Weitere Einzelheiten, Merkmale und Vorteile der Erfindung ergeben sich aus der nachfolgenden Beschreibung unter Bezugnahme auf die Zeichnung. Darin zeigt:
- Fig. 1: eine erste Ausführungsform des erfindungsgemäßen Regelventils als druckloses geschlossenes Ventil; und
- Fig. 2: eine ebenfalls drucklos geschossene zweite bevorzugte Ausführungsform des erfindungsgemäßen Regelventils.

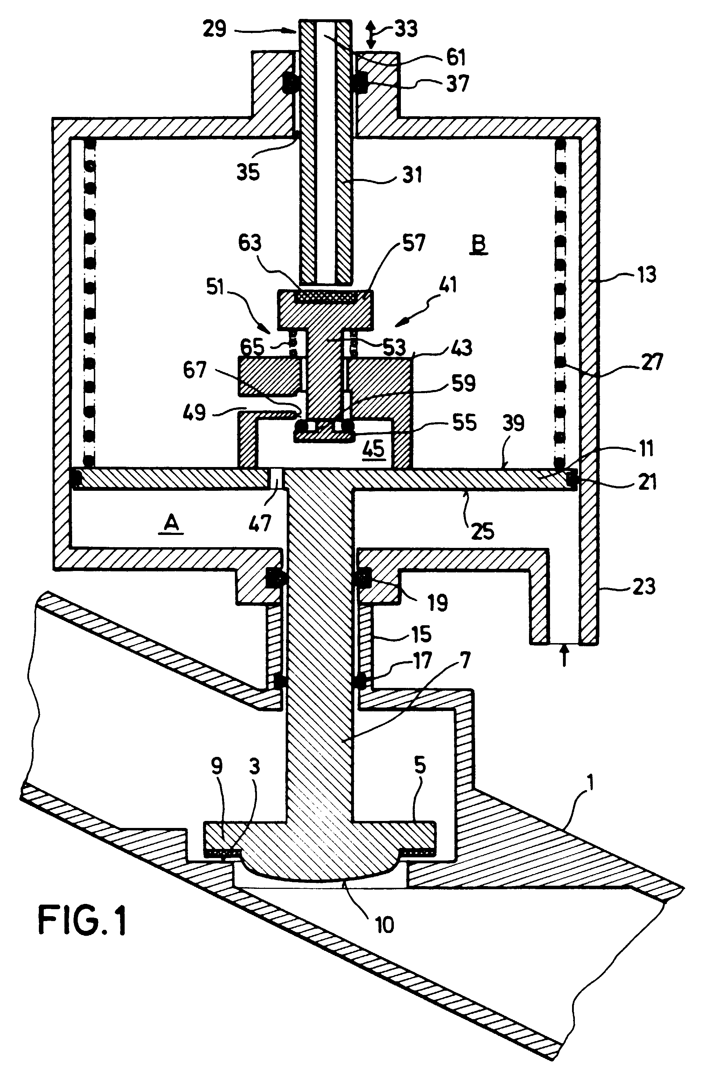

Im nachfolgenden wird zunächst die Ausführungsform gemäß Fig. 1 beschrieben. In einem Durchflußrohr 1 ist ein Ventilsitz 3 ausgebildet, der mit einem Ventilschieber 5 in Anlage gebracht werden kann, zum Schließen des Durchflusses im Durchflußrohr 1. Der Ventilkopf 9 des Ventilschiebers ist im Beispielsfalle kegelförmig 10 ausgebildet.

Der Ventilschieber weist eine Kolbenstange 7 auf, die den Ventilkopf 9 mit einem Kolben 11 verbindet. Der Kolben 11 ist in einem Gehäuse 13 des erfindungsgemäßen Regelventils angeordnet. Er ist in axialer Richtung der Kolbenstange 7 in dem Gehäuse beweglich angeordnet, wobei sich die Kolbenstange 7 durch ein entsprechendes Verbindungsrohr 15 in das Gehäuse 13 hinein erstreckt. Zur Abdichtung des Zwischenraums zwischen Kolbenstange 7 und Verbindungsrohr 15 sind in an sich bekannter Weise Dichtungen 17 und 19 vorgesehen. Weiterhin ist eine Dichtung 21 am äußeren Umfang des Kolbens zwischen dessen äußerer Umfangswand und der inneren Seitenwand des Gehäuses 13 vorgesehen.

Der Kolben 11 unterteilt das Gehäuse 13 in eine Kammer A und eine Kammer B. In die Kammer A kann durch einen Einlaßkanal 23 ein Druckmedium eingeführt werden, das die dem Ventilschieber 5 zugeordnete Seite 25 des Kolbens 11 beaufschlagt.

Gemäß der Ausführungsform von Fig. 1 wird der Ventilschieber 5 bei Fehlen eines Druckes oder nur bei geringem Druck auf die Seitenwand 25 mittels einer Feder 27 in seine Schließstellung, d.h. zur Anlage an den Ventilsitz 3 gedrückt. Diese Ausführungsform wird auch als "drucklos geschlossen" bezeichnet.

In das Gehäuse 13 ist von der dem Ventilschieber 5 entgegengesetzten Seite des Gehäuses 13 ein Stellungsgeber 29 eingeführt. Der Stellungsgeber 29 wird gebildet aus einer Stange 31, die axial beweglich gemäß Pfeil 33 in einer Eingangsöffnung 35 des Gehäuses 13 gleitbeweglich gelagert ist. In an sich bekannter Weise sind wieder geeignete Dichtungseinrichtungen 37 vorgesehen.

Zwischen dem Stellungsgeber 29 und der dem Stellungsgeber zugewandten Seite 39 des Kolbens 11 ist eine Durchlaßventileinrichtung 41 vorgesehen.

Diese Durchlaßventileinrichtung ist wie folgt aufgebaut. An der dem Stellungsgeber 29 zugeordneten Seite 39 des Kolbens 11 ist ein Ansatzstutzen 43 vorgesehen, der einen Einlaßraum 45 für das Druckfluid in der Kammer A aufweist, das durch eine im Kolben 11 ausgebildete Durchgangsöffnung 47 in den Einlaßraum 45 eingetreten kann. Der Stutzen 43 weist weiterhin eine von dem Einlaßraum 45 sich in die Kammer B erstreckenden Durchgangskanal 49 auf, der mit einem Ventil verschließbar ist.

Hierzu ist in dem Stutzen 43 eine mit zwei Endflanschen 55 und 57 versehene Stange 53 vorgesehen, die gleitbeweglich in dem Stutzen 43 angeordnet ist.

Die Stange 53 weist an ihrem dem Einlaßraum 45 zugewandten Ende einen ersten Endflansch 55 auf, der durch einen Halsabschnitt von gegenüber der Stange 53 verjüngtem Durchmesser mit der Stange 53 verbunden ist.

An ihrem anderen Ende weist die Stange 53 einen zweiten Endflansch 57 auf, der in Anlage bringbar ist an den Stellungsgeber 29.

Zur weichen und dichtenden Anlage an den Stellungsgeber 29, der einen Ablaßkanal 61 aufweist, ist in der dem Stellungsgeber 29 zugeordneten Seite des Endflansches 57 der Stange 53 ein elastischer Einsatz 63 vorgesehen.

Im nachfolgenden wird die Wirkungsweise des Regelventils gemäß der ersten in Fig. 1 dargestellten Ausführungsform beschrieben. Bei Anlegen von Druck, d.h. bei Einführen von Druckfluid durch den Einlaßkanal 23 breitet sich dieser in der Kammer A aus und wirkt auf die Seitenwand 25 des Kolbens 11. In dieser Stellung wird das Ventil 51 geschlossen, so daß durch die Durchlaßventileinrichtung 41 kein Druckfluid, das bereits in den Einlaßraum 45 durch die Durchgangsöffnung 47 eingedrungen ist, in die Kammer B vorstoßen kann. Hierzu ist eine Schraubenfeder 65 zwischen dem Stutzen 43 und dem Endflansch 57 vorgesehen, die den gegenüberliegenden Endflansch 55 gegen eine Durchlaßöffnung 67 drückt.

Bei Bewegung des Kolbens 11 in Richtung auf den Stellungsgeber 29 wird, da der Ablaßkanal 61 des Stellungsgebers 29 offen ist, das durch die Volumenänderung in der Kammer B verdrängte Volumen durch den Ablaßkanal 61 abgelassen.

Wenn der Endflansch 57 der Durchlaßventileinrichtung 41 auf den Stellungsgeber 29 trifft, verschließt er den Ablaßkanal 61. Gleichzeitig bewegt sich jedoch der Kolben 11 noch in Richtung Stellungsgeber 29, so daß sich eine Relativbewegung zwischen der Stange 53 und den Flanschen 55 und 57 in Bezug auf den Stutzen 43 ergibt. Hierdurch wird das Ventil 51 geöffnet, und das Druckmedium gelangt durch den Durchgangskanal 49 von der Kammer A in die Kammer B.

Dadurch entsteht relativ schnell, je nach Durchflußgeschwindigkeit des Druckfluids durch den Durchgangskanal 49 eine Verringerung der Druckdifferenz zwischen den beiden Kammern. Nach entsprechendem teilweisen Ausgleich und aufgrund der weiterhin gegen die Wand 25 des Kolbens 11 wirkenden Kraft als auch aufgrund der zusätzlichen Federkraft der Feder 27, wird der Kolben abgebremst, so daß der Kolben nach Innehalten, bei Überwiegen im wesentlichen der Kräfte bestehend aus der Federkraft der Feder 27 und der Fluiddruckkraft in Kammer B gegenüber der Kraft durch den Fluiddruck in Kammer A sich in die entgegengesetzte Richtung in Richtung Ventilsitz 3 bewegt. Dies geschieht so lange, bis sich der Endflansch 57 von der Anlage an den Stellungsgeber 29 entfernt, wobei gleichzeitig die Durchgangsöffnung 67 durch den Endflansch 55 verschlossen wird. Danach kann der Überdruck in Kammer B nach außen entweichen.

Es ist darauf hinzuweisen, daß während des Betriebs in der Regel ein konstanter Fluiddruck auf den Kolben wirkt. Dies führt wiederum dazu, daß beim Herausfahren des Stellungsgebers 29 aus dem Gehäuse 13 eine sofortige Nachführung, nahezu ohne Verzögerung des Kolbens und damit des gesamten Ventilschiebers 5 führt, wodurch ein schnell reagierendes Regelventil geschaffen wird.

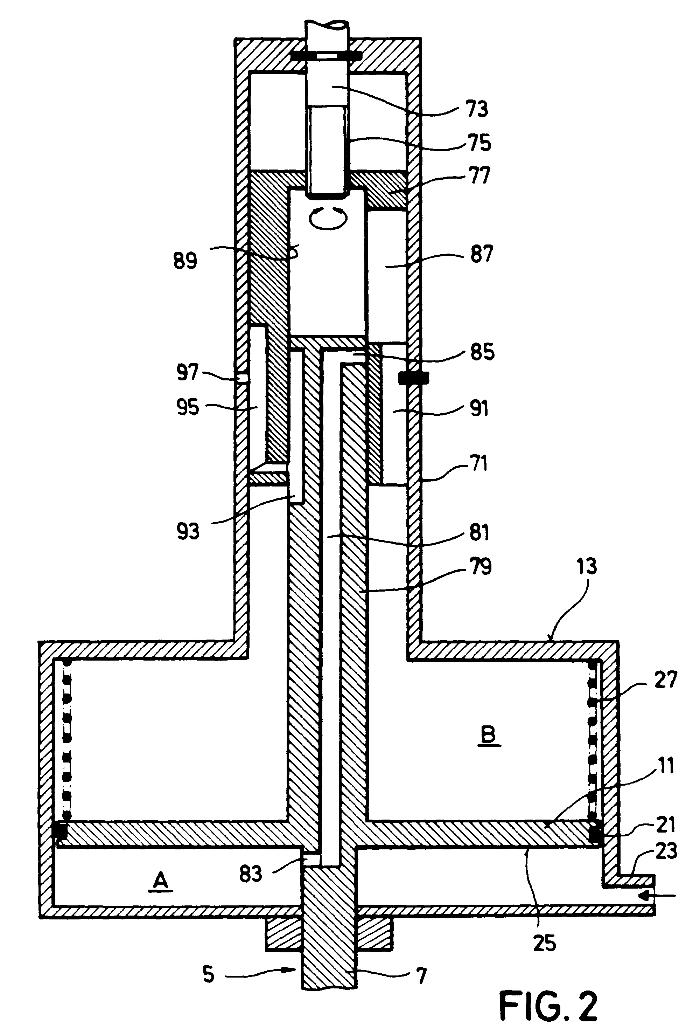

Im nachfolgenden wird nunmehr die Ausführungsform gemäß Fig. 2 beschrieben.

Hierbei werden für die zur Ausführungsform gemäß Fig. 1 vergleichbar ähnlichen Elemente mit denselben Bezugsziffern angegeben. Der sich unterhalb der Kolbenstange 7 befindliche, in dem Durchflußrohr 1 angeordnete Ventilkopf 9 wurde in dieser Figur weggelassen.

Das Gehäuse 13 weist an seinem dem Ventilschieber 5 entgegengesetzten Ende eine rohrförmige Fortsetzung 71 auf, in die sich ebenfalls von der entgegengesetzten Seite zur Seite des Ventilschiebers 5 ein Stellungsgeberelement 73 erstreckt, das im Gegensatz zum alleinigen Stellungsgeber 29 von Fig. 1 drehbar gelagert ist. Das Stellungsgeberelement 73 ist dabei selbst so gelagert, daß es sich in axialer Richtung nicht bewegen kann. An seinem in die Fortsetzung 71 hineinragenden Ende weist das Stellungsgeberelement 73 ein Außengewinde 75 auf, das in Eingriff steht mit einer in Axialrichtung längsbeweglichen Stellungsgeber oder Führungshülse 77. In der Führungshülse 77 ist gleitbeweglich eine Steuerstange 79 angeordnet, die ihrerseits mit dem Kolben 11 verbunden ist. Der Stellungsgeber der zweiten Ausführungsform umfaßt somit das Stellungsgeberelement 73 und die Führungshülse 77.

In der Steuerstange 79 ist ein Durchlaßkanal 81 zum Durchlaß des Druckfluids vorgesehen. Der Durchlaßkanal 81 beginnt mit einer Eintrittsöffnung 83, die in die Kammer A mündet und endet mit einer Austrittsöffnung 85, die am äußeren Umfang der Steuerstange 79 mündet. Zum Aufbau des Druckausgleichs zwischen Kammer A und Kammer B ist in der Führungshülse 77 eine radiale Ausnehmung 87 vorgesehen, die sich von der Innenwand der Führungshülse 77 nach außen hin, im Beispielsfalle bis zur Innenwand der Fortsetzung 71 erstreckt. Zwischen der Ausnehmung 87 und der Kammer B ist weitehrin in der Führungshülse 77 eine Kerbe 91 vorgesehen, die sich in axialer Längserstreckung von der Ausnehmung 87 bis zum axialen Ende der Führungshülse 77 erstreckt, wodurch ein Durchtrittskanal entlang der Seitenwand der Fortsetzung 71 bis zur Kammer B geschaffen wird.

Um ähnlich wie bei der Ausführungsform gemäß Fig. 1 eine Verbindung zwischen der Kammer B und der Umgebung zu schaffen, ist in der Steuerstange 79 eine Längskerbe 93 vorgesehen, die je nach Stellung der Steuerstange 79 eine Verbindung des Raums der Kammer B mit einem Ablaßkanal 95 schafft, der in der Führungshülse 77 ausgebildet ist, und mit einer Austrittsöffnung 97 in der Fortsetzung 71 des Gehäuses 13 in Verbindung steht.

Im folgenden wird die Funktionsweise der Ausführungsform gemäß Fig. 2 beschrieben. Im dargestellten Beispielsfalle befindet sich die Kammer B über die Längskerbe 93 mit dem Ablaßkanal 95 und der Austrittsöffnung 97 in Verbindung. Die Austrittsöffnung 85 endet an der Innenwand 89 der Führungshülse 77, so daß der Durchlaßkanal 81 verschlossen ist.

Wenn sich nunmehr der Kolben 11 in Richtung der Kammer B bewegt, wird einerseits die Austrittsöffnung 85 zur Ausnehmung 87 frei und andererseits die Längskerbe 93 gegenüber der Kammer B geschlossen, so daß nunmehr das Druckfluid durch den Durchlaßkanal 81 in die Kammer B hindurchtritt und relativ schnell Gegendruck erzeugt. Danach stellen sich die zur Ausführungsform gemäß Fig. 1 vergleichbaren Verhältnisse wieder ein.

Die Verstellung des Stellungsgebers erfolgt dadurch, daß durch Drehen des Stellungsgeberelements 73 die Fünrungshülse 77 in axialer Längsrichtung in der Fortsetzung 71 bewegt wird, wodurch sowohl die Ausnehmung 87 als auch der Ablaßkanal 95 bezüglich den entsprechenden Öffnungen in der Steuerstange 79 verschoben werden, so daß dies wiederum einen entsprechenden geänderten Kolbenhub des Kolbens 11 mit sich bringt.

Zusammenfassend ist deshalb festzustellen, daß mit Hilfe der vorliegenden Erfindung ein im Aufbau einfaches, im Betrieb sicheres und gegen Verschleiß robustes Regelventil geschaffen wird, das auch hohen Arbeitsbelastungen standhält. Weiterhin wird durch die erfindungsgemäße Einstellung eine exakte voreinstellbare Kolbenbewegung und damit Ventilbewegung erreicht. Insbesondere kann durch Anlegen eines entsprechenden konstanten Druckes eine definierte vorausbestimmte Kolbenbewegung geschaffen werden, die eine entsprechende Einstellung des Regelventils ermöglicht. Weiterhin wird durch die erfindungsgemäße Ausgestaltung eine entsprechend schnelle, nahezu verzögerungslose Öffnung bzw. je nach Ausbildung des Ventils auch Schließung der zu schließenden oder drosselnden Durchflußöffnung erreicht. Dabei kann die Betätigungskraft gering gehalten werden und wird ein sicheres Anfahren ermöglicht.

Alternativ zur zweiten Ausführungsform gemäß Fig. 2 kann das Stellungsgeberelement 73 ebenfalls als linear bewegbarer Zapfen ausgebildet sein, der entsprechend drehfest mit der Führungshülse 77 verbunden ist.

Weiterhin kann in einer alternativen Ausführungsform der Kolben 11 unmittelbar in Anlage an den Stellungsgeber 29 gebracht werden. Zur Verschiebung des Stellungsgebers 29 entgegen dem auf den Kolben 11 wirkenden Druck wird dieser zumindest teilweise zurückgenommen und bei erreichter Endstellung des Stellungsgebers wieder angelegt.

## Patentansprüche

1. Regelventil, mit einem bewegbaren Schließelement (5) zum Schließen und/oder Öffnen einer Ventilöffnung und einer Bewegungseinrichtung mit
- einem Stellungsgeber (29; 73, 77) zum Bewegen des Schließelementes (5) in eine bestimmte Stellung, sowie mit
- einer Antriebsvorrichtung mit einer mit dem Schließelement gekoppelten Kolbeneinrichtung (11),
- wobei die Kolbeneinrichtung (11) eine erste Wirkkammer (A) und eine zweite Wirkkammer (B) definiert, welche über einen, durch eine Durchlaßventileinrichtung verschließbaren Kanal (49; 81) miteinander verbindbar sind,
- wobei die Durchlaßventileinrichtung in Abhängigkeit von einer Relativstellung zwischen dem Stellungsgeberelement (29; 73, 77) und dem Schließelement (5) offen oder geschlossen ist,
**dadurch gekennzeichnet,**
- daß die Kolbeneinrichtung (11) in eine erste Richtung mit einer Federkraft und in eine der ersten Richtung entgegengesetzte zweite Richtung mit einem Fluiddruck beaufschlagt ist, und
- daß eine Verbindung zwischen der zweiten Wirkkammer (B) und der Umgebung durch einen in dem Stellungsgeberelement (29; 73, 77) ausgebildeten Auslaßkanal (61; 95) geschaffen wird.

2. Regelventil nach Anspruch 1, **dadurch gekennzeichnet,** daß der Stellungsgeber (29) aus einer in Bewegungseinrichtung des Ventilschiebers (5) axial bewegbaren Stange (31) gebildet ist.

3. Regelventil nach Anspruch 1, **dadurch gekennzeichnet,** daß der Stellungsgeber aus einer drehbar gelagerten Spindel (73) und aus einer Führungshülse (77) gebildet ist.

4. Regelventil nach einem der Ansprüche 1 bis 3, **dadurch gekennzeichnet,** daß der Stellungsgeber (29;73,77) mittels eines Motors in die jeweils gewünschte Stellung bewegbar ist.

5. Regelventil nach Anspruch 4, **dadurch gekennzeichnet,** daß der Motor ein Schrittmotor ist.

6. Regelventil nach einem der Ansprüche 1 bis 4, **dadurch gekennzeichnet,** daß zwischen Stellungsgeber (29;72,77) und Ventilantrieb ein Steuerelement vorgesehen ist, das bei Erreichen der vorgegebenen Position des Ventils den Antrieb beendet.

7. Regelventil nach Anspruch 6, **dadurch gekennzeichnet,** daß das Steuerelement ein Ventil oder Schieber ist.

8. Regelventil nach Anspruch 6, **dadurch gekennzeichnet,** daß das Steuerelement ein Ventil (51) umfaßt, welches aus einer Stange (53) mit einem an einem ihrer Enden angeordneten ersten Endflansch (55) aufgebaut ist, der mit einer Durchgangsöffnung (67) zum Öffnen oder Schließen des Ventils (51) zusammenwirkt.

9. Regelventil nach Anspruch 8, **dadurch gekennzeichnet,** daß die Stange (53) an ihrem dem ersten Endflansch (55) gegenüberliegenden Ende einen zweiten Endflansch (57) aufweist, der in Anlage an den Stellungsgeber (29) bringbar ist.

10. Regelventil nach einem der Ansprüche 8 oder 9, **dadurch gekennzeichnet,** daß das Durchlaßventil (51) eine Feder (65) aufweist, die den ersten Endflansch (55) in Richtung auf die Schließstellung des Ventils (51) beaufschlagt.

11. Regelventil nach Anspruch 9 oder 10, **dadurch gekennzeichnet,** daß der zweite Endflansch (57) an seinem dem Stellungsgeber (29) zugewandten Ende einen Einsatz (63) aus elastischem Material aufweist.

12. Regelventil nach einem der Ansprüche 3 bis 7, **dadurch gekennzeichnet,** daß die Kolbeneinrichtung (11) eine an einer dem Ventilschieber abgewandten Seite eine mit dieser verbundene Steuerstange (79) aufweist, die in der in einer rohrförmigen Fortsetzung (71) des Gehäuses (13) angeordneten Führungshülse (77) gleitbeweglich gelagert ist.

13. Regelventil nach Anspruch 12, **dadurch gekennzeichnet,** daß der verschließbare Kanal (81) sich von der dem Ventilschieber (73) zugewandten Kolbenseite durch die Kolbeneinrichtung (11) und die Steuerstange (79) erstreckt und am Umfangsrand der Steuerstange (79) zur Führungshülse (77) hin offen ist und mit dieser zusammenwirkt.

14. Regelventil nach Anspruch 13, **dadurch gekennzeichnet,** daß die Führungshülse (77) eine Ausnehmung (87) hat, die sich in radialer Richtung von ihrer Innenwand (89) aus erstreckt und eine sich vom äußeren Umfang der Führungshülse (77) nach innen, sich in Längsrichtung erstreckende Kerbe (91) aufweist, die die Ausnehmung (87) mit der zugeordneten zweiten Wirkkammer (B) des Gehäuses (13) verbindet.

15. Regelventil nach einem der Ansprüche 12 bis 14, **dadurch gekennzeichnet,** daß in dem Stellungsgeber (73) zugewandten Endbereich der Steuerstange (79) unterhalb ihrer Endseite eine Längskerbe (93) am äußeren Umfang ausgebildet ist, die über einen Ablaßkanal (95), der in der Führungshülse (77) ausgebildet ist, und über eine Austrittsöffnung (97) in der Fortsetzung (71) mit der Umgebung in Verbindung steht, und die zugeordnete zweite Wirkkammer (B) mit der Umgebung in Verbindung gesetzt werden kann bzw. von dieser getrennt werden kann, je nach Axialstellung der Steuerstange (79).

16. Regelventil nach einem der Ansprüche 12 bis 15, **dadurch gekennzeichnet,** daß die Einstellung des Regelventils durch axiale Bewegung der Führungshülse (77) erfolgt.

17. Regelventil nach einem der Ansprüche 7 bis 16, **dadurch gekennzeichnet,** daß der Fluiddruck durch Druckluft erzeugt wird.

18. Regelventil nach einem der Ansprüche 1 bis 17, **dadurch gekennzeichnet,** daß der Stellungsgeber (29;73,77) mittels Handbetrieb bewegbar ist.

19. Regelventil nach Anspruch 6, **dadurch gekennzeichnet,** daß der Ventilantrieb elektrisch erfolgt und das Steuerelement als Schalter ausgebildet ist.

20. Regelventil nach einem der Ansprüche 1 bis 18, **dadurch gekennzeichnet,** daß bei Ausfall der Antriebsenergie der Ventilschieber (5) in eine vorbestimmte Stellung verfährt.

## Claims

1. Control valve comprising a moveable valve closure member (5) for closing and/or opening a valve opening and a drive means including:
- a positioning means (29; 73, 77) for moving said closure member (5) into a determined position, as well as
- a drive means having a piston means (11) coupled with said closure member,
- wherein said piston means (11) is defining a first actuating chamber (A) and a second actuating chamber (B) which are connectable with each other via a passage (49; 81) closable via a passage-valve-means,
- wherein said passage valve means assuming an open or a closed condition in accordance with a relative position between said positioning member (29; 73, 77) and said closure member (5),
**characterized in that**
- said piston means (11) is subjected to a spring force acting in a first direction and a fluid pressure acting in a second direction opposite to said first direction, and
- a connection between said second actuating chamber (B) and the surrounding is provided via a drain channel (61; 95) formed within said positioning means (29; 73, 77).

2. Control valve according to claim 1, **characterized in that** said positioning means (29) is constituted by a rod (31) which is adapted to be axially movable in the direction of movement of said valve closure member (5).

3. Control valve according to claim 1, **characterized in that** said positioning means comprises a rotatably supported spindle (73) and a guide sleeve (77).

4. Control valve according to one of claims 1 to 3, **characterized in that** said positioning means (29; 73, 77) is movable to the respective desired positions by means of a motor.

5. Control valve according to claim 4, **characterized in that** said motor is a stepping motor.

6. Control valve according to one of claims 1 to 4, **characterized in that** between said positioning means (29; 73, 77) and said valve drive there is provided a control member adapted to stop driving of the valve when said valve reaches said desired position.

7. Control valve according to claim 6, **characterized in that** said control member is a valve or a slide gate.

8. Control valve according to claim 6, **characterized in that** said control element includes a valve (51) which is constituted by a rod (53) and an end flange (55) provided at one end thereof, cooperating with a through opening (67) for opening or closing said valve (51).

9. Control valve according to claim 8, **characterized in that** said rod (53) is provided with a second end flange (57) which is located at the rod end opposite to said first end flange (55) and which is adapted to be brought into contact with said positioning means (29).

10. Control valve according to claim 8 or 9, **characterized in that** said passage valve (51) is provided with a spring (65) acting on said first end flange (55) in the direction of the close position of said valve (51).

11. Control valve according to claim 9 or 10, **characterized in that** said second end flange (57) is provided at its end facing towards said positioning means (29) with an insert (63) made of elastic material.

12. Control valve according to one of claims 3 to 7, **characterized in that** at its side facing away from the valve closure member the piston means (11) is provided with a control rod (79) which is connected thereto and which is slidably supported in the guide sleeve arranged in a tubular extension of the housing (13).

13. Control valve according to claim 12, **characterized in that** said closable passage (81) extends from the piston side facing the valve closure member (73) through the piston means (11) and the control rod (79) and is open at the circumferential edge of the control rod (79) towards the guide sleeve (77) and cooperates therewith.

14. Control valve according to claim 13, **characterized in that** said guide sleeve (77) is provided with a recess (87) which extends radially from the inner wall (89) and which comprises a notch (91) which extends longitudinally from the outer circumference of the guide sleeve (77) inwardly and which interconnects said recess (87) with the associated second actuating chamber (B) of the housing (13).

15. Control valve according to one of claims 12 to 14, **characterized in that** at the end portion of the control rod (79) facing the positioning element (73) a longitudinal notch (93) is formed below the end side of said control rod (79) at the outer circumference thereof, said longitudinal notch (93) communicating with the surrounding area via a discharge passage (95) which is formed in said guide sleeve (77), and via an outlet opening (97) provided in the extension (71), said associated second actuating chamber (B) may be connected to the surrounding area and separated therefrom depending on the axial position of the control rod (79).

16. Control valve according to one of claims 12 to 15, **characterized in that** the adjustment of the control valve is carried out by axially moving said guide sleeve (77).

17. Control valve according to one of claims 7 to 16, **characterized in that** said fluid pressure is generated by pressurized air.

18. Control valve according to one of claims 1 to 17, **characterized in that** said positioning means (29; 73, 77) is adapted to be moved by hand.

19. Control valve according to claim 6, **characterized in that** said valve drive is effected electrically and said control element being formed as a switch.

20. Control valve according to one of claims 1 to 18, **characterized in that** upon failure of driving power supply said valve closure member (5) moves to a predetermined position.

## Revendications

1. Soupape de régulation, comprenant un élément de fermeture (5) mobile pour la fermeture et/ou l'ouverture d'une ouverture de soupape et un dispositif de mouvement comprenant
- un capteur de position (29; 73, 77) pour mouvoir l'élément de fermeture (5) dans une position déterminée, ainsi que
- un dispositif de commande comprenant un dispositif à piston (11) couplé à l'élément de fermeture,
- le dispositif à piston (11) définissant une première chambre active (A) et une seconde chambre active (B) qui peuvent être mises en communication l'une avec l'autre par l'intermédiaire d'un canal (49; 81) pouvant être fermé par un dispositif formant soupape de passage,
- le dispositif formant soupape de passage étant ouvert ou fermé en fonction d'une position relative entre l'élément de capteur de position (29; 73, 77) et l'élément de fermeture (5),
caractérisé
- en ce que le dispositif à piston (11) est soumis à une force élastique dans une première direction et est soumis à une pression fluidique dans une seconde direction opposée à la première direction, et
- en ce qu'une communication entre la seconde chambre active (B) et l'environnement est créée grâce à un canal de décharge (61; 95) exécuté dans l'élément de capteur de position (29; 73, 77). -.

2. Soupape de régulation selon la revendication 1, caractérisée en ce que le capteur de position (29) est formé par une tige filetée (31) mobile axialement dans la direction de mouvement de l'obturateur de soupape (5).

3. Soupape de régulation selon la revendication 1, caractérisée en ce que le capteur de position est formé par une tige filetée (73) montée de manière rotative et par une douille de guidage (77).

4. Soupape de régulation selon l'une des revendications 1 à 3, caractérisée en ce que le capteur de position (29; 73, 77) peut être amené dans la position souhaitée à chaque fois au moyen d'un moteur.

5. Soupape de régulation selon la revendication 4, caractérisée en ce que le moteur est un moteur pas à pas.

6. Soupape de régulation selon l'une des revendications 1 à 4, caractérisée en ce que l'on prévoit, entre le capteur de position (29; 72, 77) et la commande de soupape, un élément de commande qui met fin à la commande lorsque la position prédéterminée de la soupape est atteinte.

7. Soupape de régulation selon la revendication 6, caractérisée en ce que l'élément de commande est une soupape ou un obturateur.

8. Soupape de régulation selon la revendication 6, caractérisée en ce que l'élément de commande comprend une soupape (51) qui est formée par une tige (53) pourvue, à l'une de ses extrémités, d'une première bride d'extrémité (55) qui, avec une ouverture de passage (67), concourt à l'ouverture ou à la fermeture de la soupape (51).

9. Soupape de régulation selon la revendication 8, caractérisée en ce que la tige (53) est pourvue, à son extrémité située à l'opposé de la première bride d'extrémité (55), d'une seconde bride d'extrémité (57) qui peut-être mise en appui sur le capteur de position (29).

10. Soupape de régulation selon l'une des revendications 8 ou 9, caractérisée en ce que la soupape de passage (51) est pourvue d'un ressort (65) qui soumet la première bride d'extrémité (55) à une force en direction de la position de fermeture de la soupape (51).

11. Soupape de régulation selon l'une des revendications 9 à 10, caractérisée en ce que la seconde bride d'extrémité (57) est pourvue, à son extrémité située du côté du capteur de position (29), d'une garniture (63) faite d'une matière élastique.

12. Soupape de régulation selon l'une des revendications 3 à 7, caractérisée en ce que le dispositif à piston (11) est pourvu, sur un côté éloigné de l'obturateur de soupape, d'une tige de commande (79) qui lui est reliée, et qui est montée de manière à pouvoir effectuer un mouvement coulissant dans la douille de guidage (77) située dans un prolongement tubulaire (71) du boîtier (13).

13. Soupape de régulation selon la revendication 12, caractérisée en ce que le canal (81) pouvant être fermé s'étend, depuis le côté du piston tourné vers l'obturateur de soupape (73), à travers le dispositif à piston (11) et la tige de commande (79), et est ouvert, au niveau du bord circonférentiel de la tige de commande (79), en direction de la douille de guidage (77) avec laquelle il coopère.

14. Soupape de régulation selon la revendication 13, caractérisée en ce que la douille de guidage (77) est pourvue d'un évidement (87) qui s'étend depuis sa paroi interne (89) dans la direction radiale, et est pourvue d'une encoche (91) s'étendant dans la direction longitudinale depuis la circonférence externe de la douille de guidage (77) vers l'intérieur, et qui fait communiquer l'évidement (87) avec la seconde chambre active (B) associée du boîtier (13).

15. Soupape de régulation selon l'une des revendications 12 à 14, caractérisée en ce qu'une encoche longitudinale (93) est exécutée dans la zone d'extrémité de la tige de commande (79) située du côté du capteur de position (73), sous sa face d'extrémité et sur sa circonférence externe, laquelle encoche communique avec l'environnement par l'intermédiaire d'un canal de décharge (95) exécuté dans la douille de guidage (77) et d'une ouverture de sortie (97) située dans le prolongement (71), et en ce que la seconde chambre active (B) associée peut être mise en communication avec l'environnement resp. peut être séparée de celui-ci, en fonction de la position axiale de la tige de commande (79).

16. Soupape de régulation selon l'une des revendications 12 à 15, caractérisée en ce que le réglage de la soupape de régulation est effectué par le mouvement axial de la douille de guidage (77).

17. Soupape de régulation selon l'une des revendications 7 à 16, caractérisée en ce que la pression fluidique est produite par de l'air comprimé.

18. Soupape de régulation selon l'une des revendications 1 à 17, caractérisée en ce qu'on peut imprimer un mouvement au capteur de position (29; 73, 77) à la main.

19. Soupape de régulation selon la revendication 6, caractérisée en ce que la commande de la soupape est une commande électrique et l'élément de commande est exécuté en tant que commutateur.

20. Soupape de régulation selon l'une des revendications 1 à 18, caractérisée en ce que, en cas de défaut d'énergie de commande, l'obturateur de soupape (5) se met dans une position prédéterminée.
